# EUROPEAN PATENT APPLICATION

(11) **EP 1 205 345 A1**
(43) Date of publication of application: **15.05.2002**
(21) Application number: 01126964.4
(22) Date of filing: 13.11.2001
(51) Int. Cl.: B60N 2/46

(54) **Arm rest for a tunnel console of a motor vehicle**

(30) Priority: 14.11.2000 IT TO001068
(71) Applicant: FIAT AUTO S.p.A., 10135 Torino (IT)
(72) Inventor: Gasparotto, Dario, 20019 Settimo Milanese (IT)
(74) Representative: Cerbaro, Elena, Dr.

(57) **Abstract**

An arm rest (7) for a tunnel console (1) of a motor vehicle is provided with a support body (8) for an arm of a user, which body can be hinged on a support portion (2) of the tunnel console (1), delimiting a compartment (4), such as to rotate relative to the support portion (2) itself, around an axis of pivoting (24), between a lowered angular position, in which it can close the compartment (4), and a raised angular position, in which it can permit access to the compartment (4) itself; the arm rest (7) is also provided with an angular positioning device (26) which can be interposed between the support body (8) and the support portion (2), in order to adjust the angular position of the support body (8) itself around the axis of pivoting (24), between at least two angular operative positions in the vicinity of the lowered angular position.

## Description

The present invention relates to an arm rest for a tunnel console of a motor vehicle, i.e. for a structure which is disposed between the front seats, extends in a longitudinal direction relative to the motor vehicle, and delimits a plurality of object-holder compartments, one of which, which is provided in a position adjacent to the seating part of the seats, is closed by a cover.

In general, this cover is covered by a fabric or by another soft material, and defines a support surface for an arm, which can make the driver's journey as comfortable as possible.

By means of a hinge connected to a fixed portion of the tunnel console, the cover or arm rest rotates around an axis which is at right-angles to the longitudinal direction of the motor vehicle, between a lowered position, in which it extends in a longitudinal direction, closes the corresponding compartment, and permits support of the driver's forearm, and a raised position, in which it is disposed parallel to the backs of the seats, and permits access to the compartment beneath.

The arm rests for the tunnel consoles of the above-described known type, even if they are used, do not permit easy driving of the vehicle, irrespective of the physical characteristics of the driver. In particular, after the position of the seat has been adjusted according to their own physical characteristics, drivers who are particularly tall or particularly short are obliged to operate the gear lever, which is disposed between the arm rest itself and the dashboard of the motor vehicle, in conditions other than those which are ergonomically planned.

The object of the present invention is to provide an arm rest for a tunnel console of a motor vehicle, which allows the aforementioned problem to be solved simply and economically.

According to the present invention, an arm rest for a tunnel console of a motor vehicle is provided as claimed in claim 1.

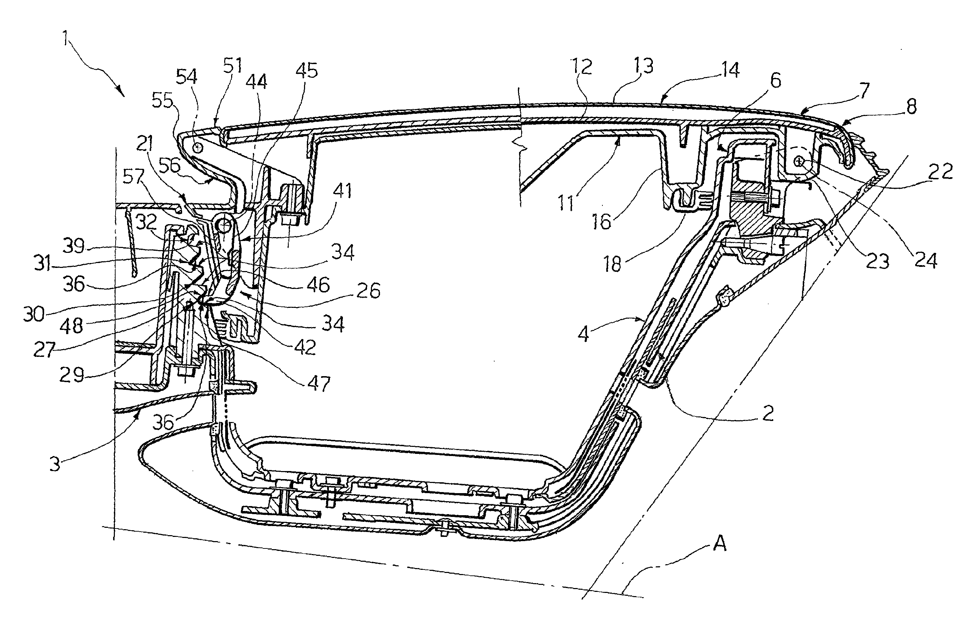

The invention will now be described with reference to the attached figure, which illustrates in longitudinal cross-section a preferred, non-limiting embodiment of the arm rest for a tunnel console of a motor vehicle, produced according to the present invention.

In the attached figure, 1 illustrates as a whole a tunnel console, which constitutes part of a motor vehicle (not illustrated) comprising, in particular, two front seats and a dashboard, which is disposed in front of the seats themselves. The tunnel console 1 extends in a horizontal longitudinal direction A, from the dashboard, between the two seats, towards a rear area of the vehicle, and comprises an intermediate portion 2, which is adjacent to the seating parts of the seats themselves.

A plurality of channels 3, which constitute part of an air-conveying system of the motor vehicle, pass through the portion 2, which delimits an object-holder compartment 4, which extends in the direction A, communicates with the channels 3, and has an upper access aperture 6.

Again with reference to the attached figure, the tunnel console 1 supports an arm rest 7, comprising a body 8, which can close the aperture 6, and comprises a structure 11, which in turn comprises an upper portion 12, which is covered by an element 13 made of fabric or another soft material, which defines a support surface 14 for a forearm of the driver. The structure 11 additionally comprises a lower portion 16, which engages the compartment 4, and is surrounded by a seal or a sealing element 18 with lips, of which only the parts in cross-section are illustrated in the attached figure, and which is supported by the portion 16 itself, and is interposed between the portion 16 and a lateral delimitation surface of the compartment 4, in order to isolate the compartment 4 from the exterior.

The body 8 is connected to the portion 2 by means of a connection unit 21, comprising a hinged device 22, which is interposed between the portion 2 and a rear end portion 23 of the portion 12. The device 22 allows the body 8 to rotate relative to the portion 2, around a horizontal axis 24 at right-angles to the direction A, between a lowered angular position, in which the body 8 extends in the direction A itself, permits support of the forearm of the driver, and closes the aperture 6, and a raised angular position (not illustrated), in which the body 8 is disposed laterally relative to the backs of the seats, and permits access to the compartment 4.

The unit 21 additionally comprises a device 26 for angular positioning of the body 8, in order to adjust the inclination of the body 8 itself in the vicinity of its lowered position, between a plurality of angular operative positions.

The device 26 is interposed between the body 8 and the portion 2, on the longitudinal side opposite the end portion 23, and comprises a toothed segment 27, which is connected integrally with the portion 2, and the teeth of which delimit four seats 29, 30, 31, 32, provided in positions facing the portion 16, along an ideal circumference around the axis 24, each associated with a corresponding operative position of the body 8, and delimited by corresponding, substantially horizontal lower surfaces 34. The seats 29, 30, 31 are also delimited by corresponding upper surfaces 36, which face the corresponding surfaces 34, and diverge upwards from the surfaces 34 themselves and towards the body 8, whereas the seat 32 is delimited by an upper surface 39, which faces, and is substantially parallel to, the corresponding surface 34.

The device 26 additionally comprises a pawl or hook 41, which at one end comprises two teeth 42 (of which only one can be seen in the attached figure), which are adjacent to one another and face in a direction opposite the end portion 23, and is pivoted at the opposite end on the portion 16, in order to rotate relative to the body 8, around an axis 44 parallel to the axis 24, between a withdrawn position (not illustrated), in which the teeth 42 are spaced from the segment 27, and an advanced position, in which the teeth 42 are kept engaged with the seats 29, 30, 31, 32 by a resilient thrust element (partially illustrated), interposed between the hook 41 and the portion 16, in order to lock the body 8. In particular, each tooth 42 is delimited by an upper surface 46 and a lower surface 47, which are parallel to one another, and tangential relative to the axis 44, and are connected to one another by a front surface 48, which, together with the surface 47, forms an angle which is substantially the same as that formed between the surfaces 36 and 34.

The hook 41 can be moved manually by the driver from its advanced position towards its withdrawn position by means of a lever 51, which is pivoted on the structure 11 around an axis 54, which is parallel to the axis 44, and extends on the opposite side of the teeth 42, relative to the axis 44 itself. The lever 51 comprises a front portion 55, which delimits a seat 56 for engagement and raising of the body 8, and for activation of the lever 51 itself, and an end arm 57, which is connected such as to abut the hook 41, in order to rotate the hook 41 itself around the axis 44.

In use, when the teeth 42 engage the seats 29, 30 or 31, the surface 47 is disposed such as to abut the surface 34, in order to prevent rotation of the body 8 around the axis 24, in an anti-clockwise direction in the attached figure, i.e. from its raised position towards its lowered position. In order to lower the body 8, it is sufficient to operate the lever 51, so as to release the teeth 42 from their corresponding seats 29, 30, 31.

Simultaneously, the surface 48 is disposed in a position facing the surface 36, and can slide against the surface 36 itself, making the teeth 42 withdraw, and releasing the teeth 42 themselves from the corresponding seats 29, 30, 31, after the body 8 has rotated in a direction which is clockwise in the attached figure, i.e. thus raising the body 8, without having to rotate the lever 51.

When the teeth reach an upper limit adjustment position associated with the seat 32, the surfaces 47 and 48 are disposed such as to abut respectively the surfaces 34 and 39, thus stopping rotation of the body 8 in both directions of rotation, until the lever 51 is activated by a user, in order to release the teeth 42 from the seat 32.

In any of the angular operative positions around the lowered position of the body 8, the element 18 is forced between the body 8 and the lateral surface of the compartment 4, such as to isolate the compartment 4, and to be able to ventilate the compartment 4 itself efficiently via the channels 3.

It is apparent from the foregoing description that the device 26 of the arm rest 7 allows the driver to adjust the angular position of the body 8 in the vicinity of its lowered position, and in particularly discretely, and thus to adapt the driving position to his own physical characteristics, such as to operate in ergonomic driving conditions, in particular in relation to operation of the gear lever which is disposed between the arm rest 7 and the dashboard.

The positioning of the body 8 is then accurate, owing to the fact that the hook 41 can snap into a plurality of seats 29, 30, 31, 32, whereas displacement of the body 8 is extremely simple and easy to perform, owing to the particular shape of the segment 27 and the lever 51.

Finally, it is apparent from the foregoing that modifications and variants which do not depart from the field of protection of the present invention can be made to the arm rest described.

In particular, the angular positioning device could be different from that described and illustrated, for example it could be able to adjust the position of the body 8 continuously and progressively rather than discretely, or between a number of angular operative positions other than that indicated.

## Claims

1. Arm rest (7) for a tunnel console (1) of a motor vehicle; the tunnel console extending in a longitudinal direction (A) and comprising a hollow support portion (2) which delimits a compartment (4); the arm rest comprising a support body (8) for an arm of a user, and means (21) for connection of the said support body (8) to the said support portion (2), comprising hinge means (22), in order to allow the said support body (8) to rotate relative to the said support portion (2), around an axis (24) at right-angles to the said longitudinal direction (A), between a lowered angular position, in which it can close the said compartment (4), and a raised angular position, in which it can permit access to the compartment (4) itself; **characterised in that** the said means (21) for connection additionally comprise means (26) for angular positioning which directly connects the said support body (8) to the said support portion (2), in order to adjust the angular position of the said support body (8) around the said axis (24), between at least two angular operative positions in the vicinity of the said lowered angular position; said means (26) for angular positioning being located on the longitudinal side opposite said axis (24) with respect to said compartment (4).

2. Arm rest according to claim 1, **characterised in that** the said means (26) for angular positioning comprise means (27) for retention, which are supported in a fixed position by one from amongst the said support portion (2) and the said support body (8), and means (41) for locking, which are supported by the other from amongst the said support portion (2) and the said support body (8), and are mobile from and towards the said means (27) for retention, in order to co-operate with the means (27) for retention themselves, and to retain the said support body (8) in the said angular operative positions.

3. Arm rest according to claim 2, **characterised in that** the said means (26) for angular positioning comprise resilient means which co-operate with the said means (41) for locking, in order to keep the means (41) for locking themselves connected to the said means (27) for retention.

4. Arm rest according to claim 2 or claim 3, **characterised in that** the said means (27) for retention comprise a toothed segment (27), comprising a plurality of positioning seats (29, 30, 31, 32); each of the said positioning seats (29, 30, 31, 32) being delimited by a stop surface (34) which can co-operate with a first surface (47) of the said means (41) for locking, in order to prevent rotation of the said support body (8), at least in a first direction of rotation.

5. Arm rest according to claim 4, **characterised in that** some of the said positioning seats (29, 30, 31) are delimited by respective guide surfaces (36), which are inclined relative to the said stop surfaces (34), and can co-operate in a sliding manner with a second surface (48) of the said means (41) for locking, forming with the said first surface (47) an angle which is substantially the same as that formed between the said stop surfaces (34) and the said guide surfaces (36).

6. Arm rest according to claim 4 or claim 5, **characterised in that** one (32) of the said positioning seats is delimited by a retention surface (39), which faces the corresponding said stop surface (34), and can co-operate by abutting with a third surface (46) of the said means (41) for locking, substantially parallel to the said first surface (47).

7. Arm rest according to any one of claims 2 to 6, **characterised in that** it comprises a movable control member (51), which can be activated manually by a user, in order to release the said means (41) for locking from the said means (27) for retention.

8. Arm rest according to claim 7, **characterised in that** the said movable control member (51) and the said means (41) for locking are supported by the said support body (8).

9. Arm rest according to claim 8, **characterised in that** the said movable control member (51) delimits a seat (56) for engagement and lifting of the said support body (8).

10. Arm rest according to claim 8 or claim 9, **characterised in that** the said means (41) for locking comprise at least one stop tooth (42), which is pivoted on the said support body (8), around a direction (44) which is parallel to the said axis (24).

11. Arm rest according to any one of the preceding claims, **characterised in that** it comprises means (18) for sealing, which surround the said support body (8), and can be forced against a lateral delimitation surface of the said compartment (4), in order to isolate the compartment (4) itself, for any one of the said angular operative positions.
